# FASCICULE DE BREVET EUROPEEN

(11) **EP 1 037 015 B1**
(45) Date de publication et mention de la délivrance du brevet: **01.10.2003**
(21) Numéro de dépôt: 00400609.4
(22) Date de dépôt: 07.03.2000
(51) Int. Cl.: G01D 5/14, G01D 5/16, G01P 13/04

(54) **Détection magnétique de position et de direction**
Magnetische Positions- und Richtungserfassung
Magnetic detection of position and direction

(30) Priorité: 12.03.1999 US 268450
(43) Date de publication de la demande: 20.09.2000
(73) Titulaire: SNR ROULEMENTS, F-74000 Annecy (FR)
(72) Inventeur: Santos, A. John, Cabinet Ballot-Schmit, 75116 Paris (FR); LaCroix, Mark E., Cabinet Ballot-Schmit, 75116 Paris (FR); Desbiolles, Pascal, Cabinet Ballot-Schmit, 75116 Paris (FR)
(74) Mandataire: Ballot, Paul

(56) Documents cités:
- EP-A- 0 112 463
- EP-A- 0 554 518
- EP-A- 0 590 222
- US-A- 4 866 382
- US-A- 5 589 769

## Description

La présente invention concerne d'une façon générale l'emploi de détecteurs magnétiques pour déterminer la position et la direction d'une cible portant des pôles magnétiques, et plus particulièrement l'emploi d'un réseau de plusieurs détecteurs magnétiques pour déterminer la position et/ou la direction.

Plusieurs capteurs magnétiques ont déjà été placés à proximité du champ magnétique d'un aimant multipolaire pour déterminer la position et la direction d'une cible. Par exemple, une chaîne de dispositifs à effet Hall peut servir à former des signaux qui sont additionnés pour créer une onde sinusoïdale, représentative du champ magnétique moyen sur l'aimant multipolaire. En additionnant les signaux des éléments détecteurs de la première moitié de la chaîne de Hall et en retranchant la somme des signaux des éléments détecteurs de la seconde moitié de la chaîne de Hall, on obtient une onde cosinusoïdale, c'est à dire une onde sinusoïdale décalée de 90° par rapport à l'onde sinusoïdale. Les ondes sinusoïdale et cosinusoïdale peuvent être employées pour déterminer la position et la direction d'une cible équipée de l'aimant multipolaire.

Des dispositifs de ce type sont effectifs dans la détermination de la position de la cible pour réduire des erreurs qui sont dues à des variations des champs magnétiques ou de l'espacement des pôles magnétiques. Toutefois, les dispositifs et procédés connus exigent que la chaîne des dispositifs détecteurs ait une longueur qui correspond précisément à l'espacement des pôles de l'aimant multipolaire avec lequel les détecteurs magnétiques doivent être employés. En plus, un champ magnétique externe polarise le champ magnétique, par exemple, en augmentant les pôles magnétiques Nord et en diminuant les pôles magnétiques Sud, ce qui fait décaler les courbes sinusoïdale et cosinusoïdale si bien que les points zéros ne sont plus régulièrement espacés. Dans l'un ou l'autre cas, le traitement des signaux des ondes sinusoïdale et cosinusoïdale introduit des erreurs dans la mesure de la position.

Ce qui précède illustre les limitations connues des dispositifs et procédés actuels. Il paraîtrait donc avantageux de proposer une variante visant à supprimer une ou plusieurs des limitations présentées ci-dessus. En conséquence, il est proposé une variante appropriée possédant des dispositions plus complètement décrites, ci-dessous.

Selon un premier aspect de l'invention, ce résultat est obtenu en proposant un procédé pour déterminer la position et/ou la direction d'une cible, la cible portant une série de pôles magnétiques dont l'espacement entre pôles est d. Le procédé consiste à : proposer un réseau d'un nombre pair N de détecteurs magnétiques avec un espacement x entre détecteurs, le réseau de détecteurs ayant une longueur effective initiale (N-1)x, cette longueur effective initiale du réseau de détecteurs étant supérieure à l'espacement d entre pôles (ou encore supérieure à deux fois l'espacement d entre pôles) ; à désactiver un nombre égal de détecteurs magnétiques de manière que les détecteurs magnétiques du réseau restant actifs soient adjacents l'un à l'autre et forment une nouvelle longueur effective du réseau de détecteurs qui est plus proche de l'espacement d entre pôles que la longueur effective initiale du réseau de détecteurs; à partager les détecteurs magnétiques du réseau restant actifs en deux groupes égaux A et B comprenant au moins un détecteur magnétique adjacent pour le traitement des signaux ; à additionner les signaux du groupe A, à additionner les signaux du groupe B ; à ajouter la somme des signaux du groupe B à la somme des signaux du groupe A pour obtenir une onde sinusoïdale ; et à retrancher la somme des signaux du groupe B de la somme des signaux du groupe A pour obtenir une onde cosinusoïdale.

Selon un autre aspect de l'invention, ce résultat est obtenu en proposant un procédé comprenant un moyen d'amplification pour équilibrer l'amplitude d'une onde sinusoïdale avec celle d'une onde cosinusoïdale.

Selon un autre aspect de l'invention, ce résultat est obtenu en prévoyant un circuit ASIC comprenant un réseau d'un nombre pair de détecteurs magnétiques, un moyen de sélection pour désactiver sélectivement un nombre pair de détecteurs magnétiques de manière que les détecteurs magnétiques restants soient adjacents l'un à l'autre et un moyens de traitement des signaux des détecteurs magnétiques restants pour générer une onde sinusoïdale et une onde cosinusoïdale.

Les aspects précédents ainsi que d'autres aspects apparaîtront grâce à la description détaillée suivante de l'invention, considérée en liaison avec les dessins annexés.

La figure 1 est un schéma représentant un aimant multipolaire et un réseau de détecteurs magnétiques en même temps que l'onde sinusoïdale et l'onde cosinusoidale produites par le traitement des signaux des détecteurs magnétiques, lorsque la longueur effective du réseau de détecteurs est adaptée à l'espacement entre pôles magnétiques, selon la technique antérieure.

La figure 2 est un schéma analogue à celui de la figure 1, mais lorsque la longueur effective du réseau de détecteurs est adaptée au double de l'espacement entre pôles magnétiques.

Les figures 3, 5 et 7 sont des schémas analogues à celui de la figure 1, mais lorsque la longueur effective du réseau de détecteurs est supérieure à l'espacement entre pôles magnétiques, pour illustrer un procédé selon l'invention.

Les figures 4, 6 et 8 sont des schémas analogues à celui de la figure 1, mais lorsque la longueur effective du réseau de détecteurs est supérieure au double de l'espacement entre pôles magnétiques, pour illustrer un procédé analogue à celui des figures 3, 5 et 7.

La figure 9 est un schéma analogue à celui de la figure 3, mais lorsque la longueur effective du réseau de détecteurs est supérieure à l'espacement entre pôles magnétiques, avant de traiter les signaux selon un autre procédé de l'invention.

La figure 10 est un schéma analogue à celui de la figure 4, mais lorsque la longueur effective du réseau de détecteurs est supérieure à l'espacement entre pôles magnétiques, avant de traiter les signaux selon un autre procédé de l'invention.

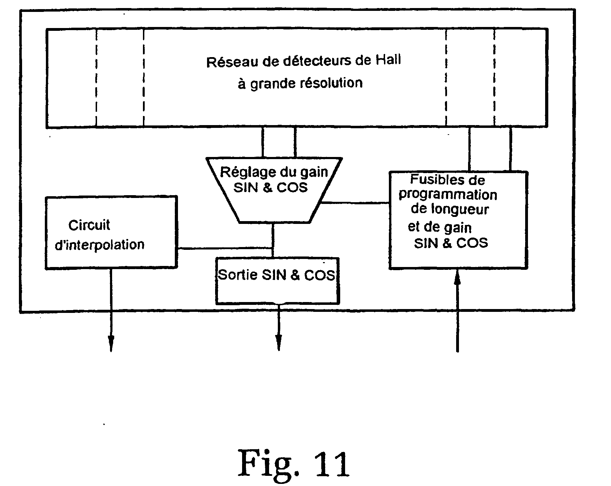

La figure 11 est un schéma de principe d'un circuit ASIC (Application Specific Integrated Circuit, circuit intégré conçu pour une application spécifique), illustrant un dispositif selon l'invention pour déterminer la position et/ou la direction d'une cible équipée d'un aimant multipolaire.

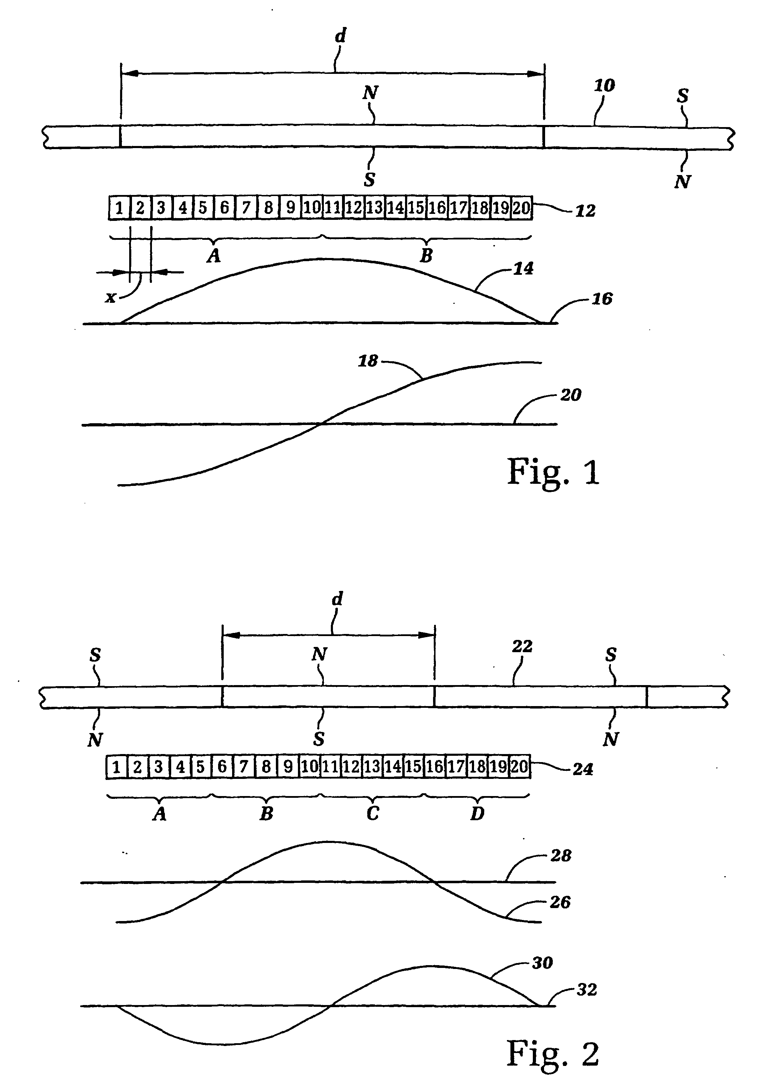

En faisant maintenant référence aux dessins, la figure 1 illustre un aimant multipolaire 10 avec un espacement d entre pôles, adapté à un réseau 12 de détecteurs magnétiques selon la technique antérieure décrite ci-dessus. En additionnant les signaux des détecteurs magnétiques A de la première moitié du réseau 12 et la somme des signaux des détecteurs magnétiques B de la seconde moitié du réseau 12, on obtient une onde sinusoïdale ayant des passages par zéro sur un axe 16. En additionnant les signaux des détecteurs magnétiques A de la première moitié du réseau 12 et en soustrayant la somme des signaux des détecteurs magnétiques B de la seconde moitié du réseau 12, on obtient une onde cosinusoïdale 18 ayant des passages par zéro sur un axe 20.

Sur la figure 1, la demi-période de l'onde sinusoïdale (ou cosinusoïdale) correspond à la longueur effective du réseau 12. On sait que la longueur effective du réseau 12 est égale à : (N-1)x, où N est le nombre des détecteurs magnétiques et x l'espacement entre détecteurs. Sur la figure, le nombre N est donc 20. La longueur effective du réseau peut être raccourcie par rapport à cette longueur calculée si le réseau est en biais par rapport à l'orientation de l'aimant multipolaire. Sur la figure 1, la longueur du réseau est égale à l'espacement d entre pôles.

La figure 2 représente un aimant multipolaire 22 avec un espacement d entre pôles égal à la longueur effective (N-1)x d'un réseau 24 de détecteurs magnétiques. En additionnant les signaux des détecteurs magnétiques A et D du premier et du quatrième quarts du réseau 24 et en soustrayant la somme des signaux des détecteurs magnétiques B et C du second et du troisième quarts du réseau 24 on obtient une onde sinusoïdale 26 dont les passages par zéro sont sur l'axe 28. En additionnant les signaux des détecteurs magnétiques A et B et en soustrayant la somme des signaux des détecteurs magnétiques C et D on obtient une onde cosinusoïdale 30 dont les passages par zéro sont sur l'axe 32. Une période entière de l'onde sinusoïdale (ou cosinusoïdale) correspond à la longueur du réseau 12.

Dans l'invention, un réseau de détecteurs magnétiques (tels des dispositifs à effet Hall, par exemple) peut être employé pour détecter soit la demi-période d'une cible à aimant multipolaire, soit une période entière d'un aimant multipolaire. La détection d'une période entière est avantageuse du fait qu'elle moyenne des inconstances de la longueur ou de l'intensité des pôles individuels de l'aimant et qu'elle permet de partager les pôles avec une plus grande précision et une plus grande répétitivité. Cette technique de la période entière a encore l'avantage de rejeter de quelconques champs magnétiques polarisants vus par tout le réseau et de rejeter aussi le bruit électrique en mode commun. Grâce à quoi, il est possible d'employer un aimant qui risque d'avoir un champ de polarisation fixe ou progressivement variable et de placer l'ensemble de l'aimant et des détecteurs dans un champ magnétique sans nuire au signal de sortie du circuit sinusoïdal ou cosinusoïdal.

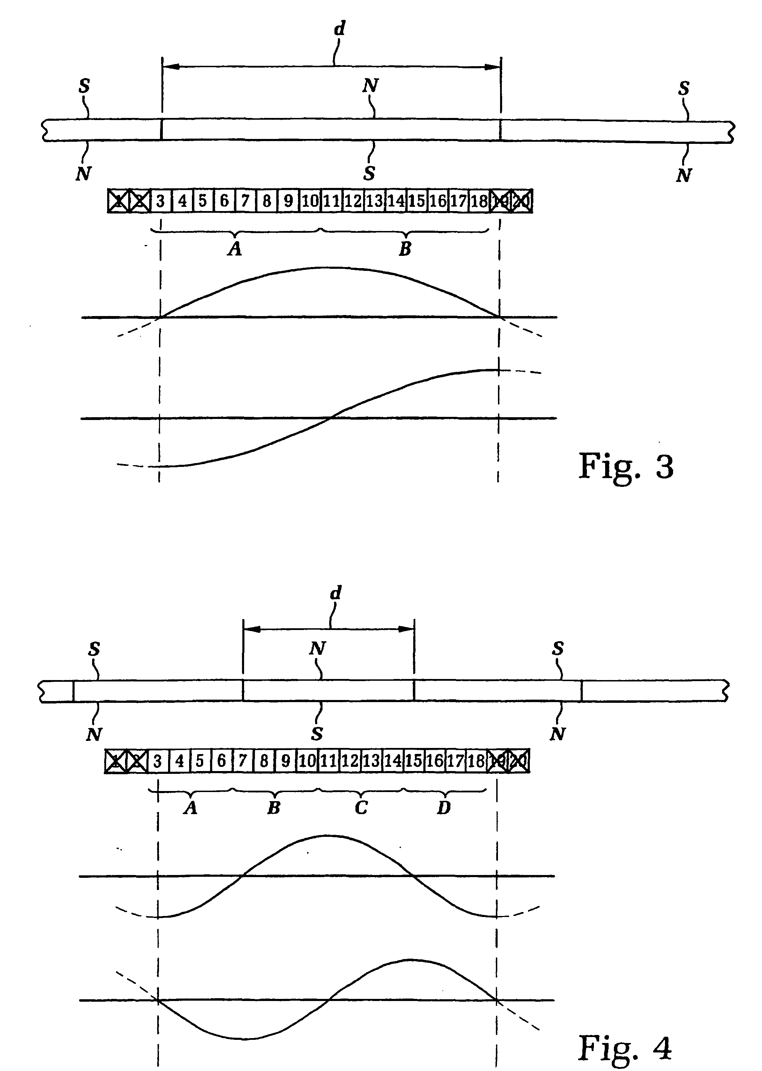

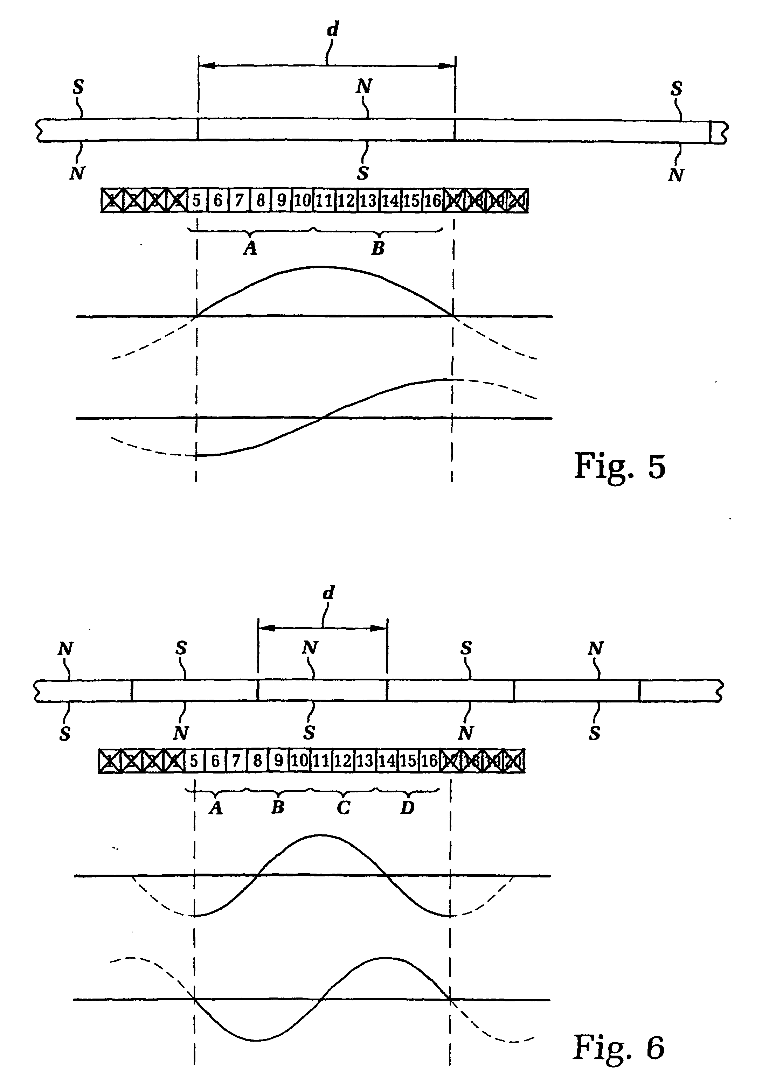

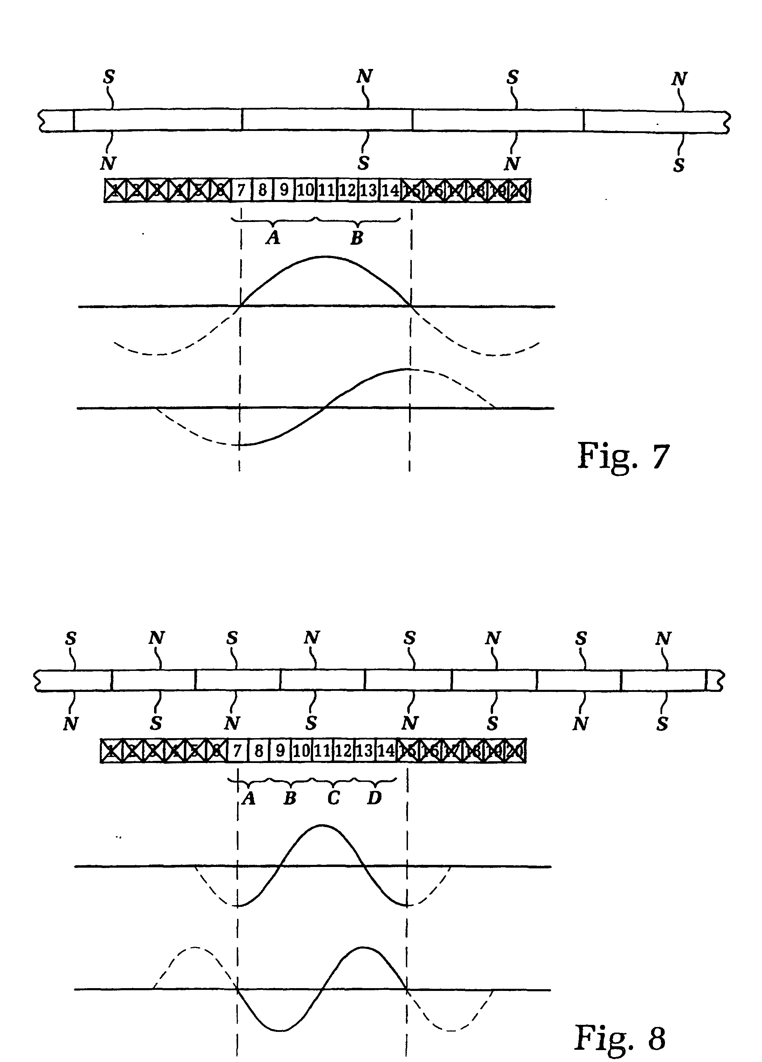

Ainsi que le représentent les figures 3 à 10, l'invention peut proposer un réseau pour détecter des pôles magnétiques de différentes longueurs en invalidant des détecteurs magnétiques des extrémités du réseau. Ces derniers sont invalidés deux à la fois pour la technique à un seul pôle et quatre à la fois pour la technique à deux pôles. Ou encore, un nombre égal de détecteurs magnétiques peut être invalidé à une seule extrémité du réseau. Cette invalidation des détecteurs magnétiques permet de grouper les détecteurs magnétiques restant actifs pour les adapter, approximativement, soit à l'espacement d entre pôles soit au double de l'espacement d entre pôles. Le traitement des signaux est alors analogue au traitement décrit au sujet des figures 1 et 2.

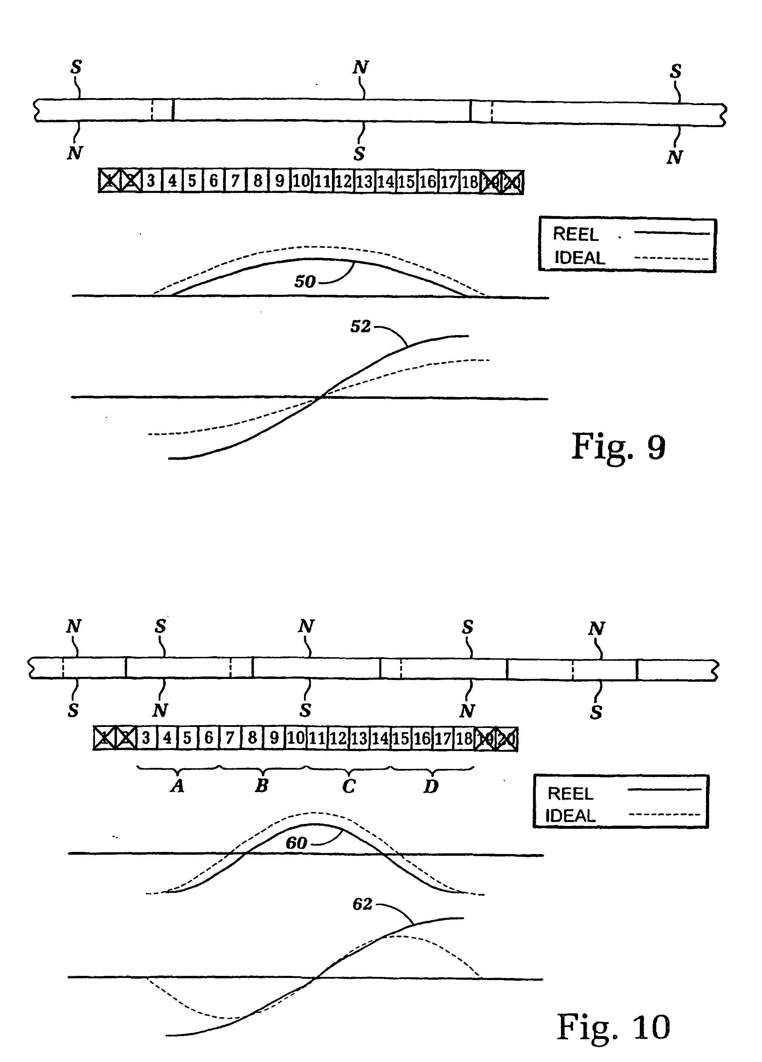

Si la longueur effective du réseau de détecteurs résultant de cette suppression de détecteurs magnétiques actifs n'est pas suffisamment proche, soit de l'espacement d entre pôles, soit du double de l'espacement d entre pôles, l'onde sinusoïdale et l'onde cosinusoïdale ainsi formées ne sont pas équilibrées, par exemple, l'onde sinusoïdale 50, ou 60 peut avoir une amplitude inférieure à 1 et l'onde sinusoïdale 52, ou 62 peut avoir une amplitude supérieure à 1 comme le montrent les figures 9 et 10. Pour obtenir un ajustement plus précis, un autre aspect de l'invention permet une synchronisation électrique de la longueur effective du réseau de détecteurs pour agir entre les longueurs fixes des pôles, imposées par le nombre des détecteurs magnétiques et leur espacement. Les additions qui forment les signaux sinusoïdaux et cosinusoïdaux continuent à former des signaux qui sont sinusoïdaux et cosinusoïdaux mais avec une amplitude plus grande ou plus petite lorsque la longueur du réseau n'est pas adaptée à la longueur des pôles. Un moyen d'amplification formant un coefficient de proportionnalité, ou gain, est prévu entre les circuits d'addition et les circuits qui séparaient le signal sinusoïdal et le signal cosinusoïdal. Ce coefficient d'amplification fixe à égalité les amplitudes du signal sinusoïdal et du signal cosinusoïdal et permet d'employer un pôle de largeur quelconque.

Une disposition supplémentaire de l'invention rend plus pratique l'emploi de cette technique d'ajustement fin du gain. Dans une application, la torsion du réseau ou le déplacement de la position radiale du réseau de détecteurs sur une cible radiale affecte la longueur effective du pôle vue par le réseau. Une désadaptation entre la longueur effective du réseau et la longueur effective des pôles conduit à un signal sinusoïdal et un signal cosinusoïdal d'amplitudes différentes. Il est important d'adapter le gain du signal sinusoïdal et du signal cosinusoïdal le mieux possible, dans le circuit ASIC pour obtenir la meilleure qualité du signal appliqué à la partie multiplicateur du circuit. Pour rendre le circuit du réseau de détecteurs réglable dans une application, il fallait accéder provisoirement à ce signal sinusoïdal ou cosinusoïdal, de préférence une fois le circuit du réseau des détecteurs placé dans sa position fonctionnelle finale.

La présente invention propose un procédé pour acheminer le signal sinusoïdal et le signal cosinusoïdal en dehors du circuit en partageant une ligne de signaux nécessaire à l'utilisateur. Cette disposition permettrait un ajustement fin en direct du signal sinusoïdal et du signal cosinusoïdal pour fixer l'espacement exact entre pôles, après assemblage. L'emploi d'une ligne de signaux existante diminue le prix de revient et le nombre des lignes de signaux. L'emploi d'une seule ligne supprime toute désadaptation possible du gain qui risquerait d'être associée à l'emploi de deux lignes distinctes pour le signal sinusoïdal et le signal cosinusoïdal. L'ensemble des détecteurs peut être programmé dans une application après assemblage pour obtenir des performances maximales. Après programmation, la ligne employée pour vérifier les niveaux des signaux peut être reprogrammée afin d'effectuer une fonction différente pour l'utilisateur.

## Revendications

1. Procédé pour déterminer la position et/ou l'orientation d'une cible, la cible portant une série de pôles magnétiques avec un espacement d entre pôles magnétiques, le procédé consistant à :
prévoir un réseau (12, 22) d'un nombre pair N de détecteurs magnétiques avec un espacement x entre détecteurs, le réseau de détecteurs ayant une longueur effective initiale (N-1)x, supérieure à l'espacement d entre pôles ;
désactiver un nombre pair de détecteurs magnétiques de manière que les détecteurs magnétiques du réseau restant actifs soient adjacents l'un à l'autre et forment une nouvelle longueur effective du réseau de détecteurs qui soit plus proche de l'espacement d entre pôles que la longueur effective initiale de réseau de détecteurs;
partager les détecteurs magnétiques du réseau restant actifs en deux groupes égaux A et B comprenant au moins un détecteur magnétique adjacent pour le traitement des signaux;
additionner les signaux du groupe A et additionner les signaux du groupe B;
ajouter la somme des signaux du groupe B à la somme des signaux du groupe A pour obtenir une onde sinusoïdale ; et
soustraire la somme des signaux du groupe B de la somme des signaux du groupe A pour obtenir une onde cosinusoïdale.

2. Procédé pour déterminer la position et/ou la direction d'une cible, la cible ayant une série de pôles magnétiques avec un espacement d entre pôles magnétiques, le procédé consistant à :
prévoir un réseau d'un nombre pair N de détecteurs magnétiques avec un espacement x entre détecteurs, le réseau de détecteurs ayant une longueur effective initiale (N-1)x, supérieure au double de l'espacement d entre pôles ;
désactiver un nombre pair de détecteurs magnétiques de manière que les détecteurs magnétiques du réseau restant actifs soient adjacents l'un à l'autre et forment une nouvelle longueur effective du réseau de détecteurs qui soit plus proche de l'espacement entre pôles d que la longueur effective initiale de réseau de détecteurs;
partager les détecteurs magnétiques du réseau restant actifs en quatre groupes égaux A, B, C et D d'au moins un détecteur magnétique adjacent pour le traitement des signaux ;
additionner les signaux de chacun des quatre groupes de détecteurs magnétiques ;
soustraire la somme des signaux des groupes A et D de la somme des signaux des groupes B et C pour obtenir une onde sinusoïdale ; et
soustraire la somme des signaux des groupes C et D de la somme des signaux des groupes A et B pour obtenir une onde cosinusoïdale.

3. Procédé selon la revendication 1 ou 2, comprenant encore un moyen d'amplification pour équilibrer l'amplitude de l'onde sinusoïdale avec celle de l'onde cosinusoïdale.

4. Procédé selon la revendication 1 ou 2, dans lequel le réseau de détecteurs magnétiques est placé sur un circuit ASIC (application specific integrated circuit, circuit intégré pour application spécifique), et dans lequel la désactivation d'un nombre pair de détecteurs magnétiques est obtenue grâce à plusieurs fusibles, réglables, prévus sur le circuit ASIC.

5. Procédé selon la revendication 1 ou 2, dans lequel la désactivation des détecteurs magnétiques est telle qu'un nombre pair de détecteurs magnétiques soit désactivé à chaque extrémité du réseau de détecteurs magnétiques.

6. Procédé selon la revendication 1, **caractérisé en ce que** la longueur effective initiale (N-1)x du réseau de détecteurs est supérieure au double de l'espacement d entre pôles ;
**en ce que** les détecteurs magnétiques actifs restants du réseau sont partagés en deux groupes égaux A et B de détecteurs magnétiques adjacents pour le traitement des signaux ;
**et ce qu'**un moyen d'amplification est employé pour équilibrer l'amplitude de l'onde sinusoïdale avec celle de l'onde cosinusoïdale.

7. Procédé selon la revendication 2, **caractérisé en ce que** les détecteurs magnétiques actifs restants du réseau sont partagés en quatre groupes égaux A, B, C et D de détecteurs magnétiques adjacents pour le traitement des signaux, et
**en ce qu'**un moyen d'amplification est employé pour équilibrer l'amplitude de l'onde sinusoïdale avec celle de l'onde cosinusoïdale.

8. Circuit ASIC (application specific integrated circuit, circuit intégré pour application spécifique) pour déterminer la position et/ou la direction d'une cible portant des pôles magnétiques, le circuit ASIC comprenant :
un réseau comprenant un nombre pair de détecteurs magnétiques disposés suivant un espacement fixe et formant une longueur effective de réseau ;
un moyen de sélection pour désactiver sélectivement un nombre pair de détecteurs magnétiques de manière que les détecteurs magnétiques du réseau restant actifs soient adjacents l'un à l'autre ; et
un moyen de traitement des signaux pour traiter les signaux des détecteurs magnétiques restants et générer une onde sinusoïdale et une onde cosinusoïdale.

9. Circuit ASIC selon la revendication 8, comprenant encore :
un moyen amplificateur pour équilibrer l'amplitude de l'onde sinusoïdale avec celle de l'onde cosinusoïdale.

10. Circuit ASIC selon la revendication 9 dans lequel le moyen d'amplification comprend plusieurs fusibles, réglables pour obtenir plusieurs réglages du gain.

11. Circuit ASIC selon la revendication 8 dans lequel le moyen de sélection comprend plusieurs fusibles pour réduire la longueur effective du réseau.

12. Circuit ASIC selon la revendication 8 dans lequel les détecteurs magnétiques restant actifs peuvent être appliqués à un aimant multipolaire ayant un espacement entre pôles approchant la longueur effective du réseau desdits détecteurs magnétiques actifs.

13. Circuit ASIC selon la revendication 8 dans lequel les détecteurs magnétiques restant actifs peuvent être appliqués à un aimant multipolaire ayant un espacement entre pôles approchant la demi-longueur effective du réseau desdits détecteurs magnétiques actifs.

14. Circuit ASIC selon la revendication 8 dans lequel le moyen de sélection peut sélectivement désactiver un nombre pair choisi de détecteurs magnétiques pour obtenir une longueur effective raccourcie choisie du réseau.

## Patentansprüche

1. Verfahren zum Bestimmen der Position und/oder der Orientierung einer Scheibe, wobei die Scheibe eine Reihe von magnetischen Polen mit einer Entfernung d zwischen den magnetischen Polen trägt, wobei das Verfahren besteht aus:
Vorsehen eines Gitters (12, 22) einer geraden Anzahl N von magnetischen Detektoren mit einer Entfernung x zwischen den Detektoren, wobei das Gitter von Detektoren eine effektive Anfangslänge (N-1)x aufweist, die größer ist als die Entfernung d zwischen den Polen;
Deaktivieren einer geraden Anzahl von magnetischen Detektoren in einer Weise, daß die magnetischen Detektoren des Gitters, die aktiv bleiben, zueinander benachbart sind und eine neue effektive Länge des Gitters von Detektoren bilden, die näher an der Entfernung d zwischen den Polen ist als die effektive Anfangslänge des Gitters von Detektoren;
Unterteilen der magnetischen Detektoren des Gitters, die aktiv bleiben, in zwei gleiche Gruppen A und B, die zumindest einen benachbarten magnetischen Detektor für die Verarbeitung von Signalen aufweisen;
Addieren der Signale der Gruppe A und Addieren der Signale der Gruppe B;
Hinzufügen der Summe der Signale der Gruppe B zur Summe der Signale der Gruppe A, um eine sinusförmige Welle zu erhalten; und
Subtrahieren der Summe der Signale der Gruppe B von der Summe der Signale der Gruppe A, um eine cosinusförmige Welle zu erhalten.

2. Verfahren zum Bestimmen der Position und/oder der Richtung einer Scheibe, wobei die Scheibe eine Reihe von magnetischen Polen mit einer Entfernung d zwischen den magnetischen Polen aufweist, wobei das Verfahren besteht aus:
Vorsehen eines Gitters einer geraden Anzahl von magnetischen Detektoren mit einer Entfernung x zwischen den Detektoren, wobei das Gitter von Detektoren eine effektive Anfangslänge (N-1)x aufweist, die größer ist als das Doppelte der Entfernung d zwischen den Polen;
Deaktivieren einer geraden Anzahl von magnetischen Detektoren in einer Weise, daß die magnetischen Detektoren des Gitters, die aktiv bleiben, zueinander benachbart sind und eine neue effektive Länge des Gitters von Detektoren bilden, die näher an der Entfernung zwischen den Polen d ist als die effektive Anfangslänge des Gitters von Detektoren;
Unterteilen der magnetischen Detektoren des Gitters, die aktiv bleiben, in vier gleiche Gruppen A, B, C und D mit zumindest einem benachbarten magnetischen Detektor für die Behandlung der Signale;
Addieren der Signale jeder der vier Gruppen von magnetischen Detektoren;
Subtrahieren der Summe der Signale der Gruppen A und D von der Summe der Signale der Gruppen B und C, um eine sinusförmige Welle zu erhalten; und
Subtrahieren der Summe der Signale der Gruppen C und D von der Summe der Signale der Gruppen A und B, um eine cosinusförmige Welle zu erhalten.

3. Verfahren nach Anspruch 1 oder 2, welches darüber hinaus ein Verstärkungsmittel aufweist, um die Amplitude der sinusförmigen Welle mit jener der cosinusförmigen Welle auszugleichen.

4. Verfahren nach Anspruch 1 oder 2, bei welchem das Gitter von magnetischen Detektoren auf einer ASIC-Schaltung (application specific integrated circuit, integrierte Schaltung für eine spezifische Anwendung) angeordnet ist, und bei welcher die Deaktivierung einer geraden Anzahl von magnetischen Detektoren mit Hilfe von mehreren einstellbaren Sicherungen erhalten wird, die auf der ASIC-Schaltung vorgesehen sind.

5. Verfahren nach Anspruch 1 oder 2, bei welchem die Deaktivierung der magnetischen Detektoren derart erfolgt, daß eine gerade Anzahl von magnetischen Detektoren an jedem Ende des Gitters von magnetischen Detektoren deaktiviert wird.

6. Verfahren nach Anspruch 1, **dadurch gekennzeichnet, daß** die effektive Anfangslänge (N-1)x des Gitters von Detektoren größer als das Doppelte der Entfernung d zwischen den Polen ist;
dadurch, daß die magnetischen Detektoren des Gitters, die aktiv bleiben, in zwei gleiche Gruppen A und B von benachbarten magnetischen Detektoren für die Verarbeitung der Signale unterteilt sind;
und daß ein Verstärkungsmittel verwendet wird, um die Amplitude der sinusförmigen Welle mit jener der cosinusförmigen Welle auszugleichen.

7. Verfahren nach Anspruch 2, **dadurch gekennzeichnet, daß** die magnetischen Detektoren des Gitters, die aktiv bleiben, in vier gleiche Gruppen A, B, C und D von benachbarten magnetischen Detektoren für die Verarbeitung der Signale unterteilt werden und
daß ein Verstärkungsmittel verwendet wird, um die Amplitude der sinusförmigen Welle mit jener der cosinusförmigen Welle auszugleichen.

8. ASIC-Schaltung (application specific integrated circuit, integrierte Schaltung für eine spezifische Anwendung), um die Position und/oder die Richtung einer Scheibe zu bestimmen, die magnetische Pole trägt, wobei die ASIC-Schaltung aufweist:
ein Gitter, das eine gerade Anzahl von magnetischen Detektoren aufweist, die mit einer festen Entfernung angeordnet sind und eine effektive Gitterlänge bilden;
ein Auswahlmittel, um selektiv eine gerade Anzahl von magnetischen Detektoren in einer Weise zu deaktivieren, daß die magnetischen Detektoren des Gitters, die aktiv bleiben, zueinander benachbart sind; und
ein Signalverarbeitungsmittel, um die Signale der magnetischen Detektoren, die übrig bleiben, zu verarbeiten und um eine sinusförmige Welle und eine cosinusförmige Welle zu erzeugen.

9. ASIC-Schaltung nach Anspruch 8, die darüber hinaus aufweist:
ein Verstärkermittel, um die Amplitude der sinusförmigen Welle mit jener der cosinusförmigen Welle auszugleichen.

10. ASIC-Schaltung nach Anspruch 9, bei welcher das Verstärkungsmittel mehrere Sicherungen aufweist, die einstellbar sind, um mehrere Einstellungen der Verstärkung zu erhalten.

11. ASIC-Schaltung nach Anspruch 8, bei welcher das Auswahlmittel mehrere Sicherungen aufweist, um die effektive Länge des Gitters zu reduzieren.

12. ASIC-Schaltung nach Anspruch 8, bei welcher die magnetischen Detektoren, die aktiv bleiben, an einen multipolaren Magneten angelegt sein können, der eine Entfernung zwischen den Polen aufweist, welche der effektiven Länge des Gitters der aktiven magnetischen Detektoren nahe ist.

13. ASIC-Schaltung nach Anspruch 8, bei welcher die magnetischen Detektoren, die aktiv bleiben, an einen multipolaren Magneten angelegt sein können, der eine Entfernung zwischen den Polen aufweist, die der effektiven Halblänge des Gitters der aktiven magnetischen Detektoren nahe ist.

14. ASIC-Schaltung nach Anspruch 8, bei welcher das Auswahlmittel selektiv eine ausgewählte gerade Anzahl von magnetischen Detektoren deaktivieren kann, um eine effektive verkürzte ausgewählte Länge des Gitters zu erhalten.

## Claims

1. Procedure for determining the position and/or the orientation of a target, the target carrying a series of magnetic poles with a spacing d between magnetic poles, the procedure consisting of:
providing a network (12, 22) of an even number N of magnetic detectors with a distance x between detectors, the network of detectors having an effective initial length (N-1)x greater than the distance d between poles;
deactivating an even number of magnetic detectors in a manner such that the magnetic detectors of the network remaining active are adjacent to each other and form a new effective length of the network of detectors that is nearer to the distance d between poles than the effective initial length of the network of detectors;
dividing the magnetic detectors of the network remaining active into two equal groups A and B including at least one adjacent magnetic detector for the processing of the signals;
adding the signals from group A and adding the signals from group B;
adding the sum of the group B signals to the sum of the group A signals in order to obtain a sine wave;
subtracting the sum of group B signals from the sum of the group A signals in order to obtain a cosine wave.

2. Procedure for determining the position and/or the orientation of a target, the target having a series of magnetic poles with a spacing d between magnetic poles, the procedure consisting of:
providing a network of an even number N of magnetic detectors with a distance x between detectors, the network of detectors having an effective initial length (N-1)x greater than twice the distance d between poles;
deactivating an even number of magnetic detectors in a manner such that the magnetic detectors of the network remaining active are adjacent to each other and form a new effective length of the network of detectors that is nearer to the distance d between poles than the effective initial length of the network of detectors;
dividing the magnetic detectors of the network remaining active into four equal groups A, B, C and D of at least one adjacent magnetic detector for the processing of the signals;
adding the signals from each of the four groups of magnetic detectors;
subtracting the sum of the signals from groups A and D from the sum of the signals from groups B and C in order to obtain a sine wave, and
subtracting the sums of the signals from groups C and D from the sum of the signals from groups A and B in order to obtain a cosine wave.

3. Procedure according to Claim 1 or Claim 2, including a means of amplification to balance the amplitude of the sine wave with that of the cosine wave.

4. Procedure according to Claim 1 or Claim 2, in which the network of magnetic detectors is placed on an ASIC (Application-Specific Integrated Circuit) and in which the deactivation of an even number of magnetic detectors is obtained by means of several adjustable cut-outs located on the ASIC.

5. Procedure according to Claim 1 or Claim 2, in which the deactivation of the magnetic detectors is such that an even number of magnetic detectors is deactivated at each extremity of the network of magnetic detectors.

6. Procedure according to Claim 1, ***characterised in that*** the effective initial length (N-1)x of the network of detectors is greater than twice the distance d between poles;
***in that*** the remaining active magnetic detectors in the network are divided into two equal groups A and B of adjacent magnetic detectors for the processing of the signals,
and ***in that*** a means of amplification is used in order to balance the amplitude of the sine wave with that of the cosine wave.

7. Procedure according to Claim 2, ***characterised in that*** the remaining active magnetic detectors in the network are divided into four equal groups A, B, C and D of adjacent magnetic detectors for the processing of the signals, and
***in that*** a means of amplification is used in order to balance the amplitude of the sine wave with that of the cosine wave.

8. An ASIC (Application-Specific Integrated Circuit) to determine the position and/or the direction of a target carrying magnetic poles, the ASIC comprising:
a network including an even number of magnetic detectors arranged with fixed spacing and forming an effective network length;
a means of selection for selectively deactivating an even number of magnetic detectors in such a manner that the remaining active magnetic detectors in the network are adjacent to each other, and
a means of signal processing to process the signals from the remaining magnetic detectors and generate a sine wave and a cosine wave.

9. ASIC according to Claim 8, also comprising:
a means of amplification in order to balance the amplitude of the sine wave with that of the cosine wave.

10. ASIC according to Claim 9, in which the means of amplification has several adjustable cut-outs in order to obtain several gain settings.

11. ASIC according to Claim 8, in which the means of selection has several cut-outs to reduce the effective length of the network.

12. ASIC according to Claim 8, in which the magnetic detectors remaining active can be applied to a multi-pole magnet having a pole spacing approaching the effective length of the network of the said active magnetic detectors.

13. ASIC according to Claim 8 in which the magnetic detectors remaining active can be applied to a multi-pole magnet having a pole spacing approaching the effective half-length of the network of the said active magnetic detectors.

14. ASIC according to Claim 8, in which the means of selection can selectively deactivate a chosen even number of magnetic detectors in order to obtain the chosen shorter effective network length.
